# EUROPEAN PATENT APPLICATION

(11) **EP 1 610 532 A1**
(43) Date of publication of application: **28.12.2005**
(21) Application number: 05291268.0
(22) Date of filing: 13.06.2005
(51) Int. Cl.: H04M 1/02, G01J 5/04, H04N 5/225

(54) **Thermal imager**

(30) Priority: 25.06.2004 CN 200400650567
(71) Applicant: Huang, Li, Wuhan 430070 (CN)
(72) Inventor: Huang, Li, Wuhan 430070 (CN)
(74) Representative: Burbaud, Eric

(57) **Abstract**

This invention relates to a mobile phone like thermal imager comprising a housing and infrared imaging system, characterized in that the housing is in shape of a mobile phone with function keys and display screen on it, lens is on top of the housing, and detector is positioned at upper side of the interior of the housing. This invention has the advantages of novel conceive, credible performance, compact design, elegant appearance, and etc.

## Description

### Technical Field

The present invention relates to an optoelectronic product, more particularly to a thermal imager comprising infrared imaging assembly and in shape of mobile phone.

### Background

The non-refrigeration type focal plane array infrared thermal imager widely used in the market is an optoelectronic system comprising infrared detector, optical imaging system and display. This system receives the infrared energy emitted by an object by means of the photosensitive elements of the infrared detector; the detector then converts the infrared energy into electric signals. After amplifying and processing, the electric signals are converted into standard video signals which are displayed as infrared thermal image by CRT or LCD. The thermal image is in correspondence with the thermal distribution on the surface of the object. Actually, compared with visible light image, thermal distribution image of infrared irradiation is lack of level and stereo perception because the signals are weak. Therefore, in order to more effectively measure the thermal distribution of the object in practice, some auxiliary means are taken to enhance the functions.

As an infrared imaging instrument, thermal imager has all the advantages of infrared thermometer, such as non-contact, quick, and capable of measuring temperature on moving objects and tiny objects and so on. Besides, thermal imager possesses some other advantages, such as vivid display of the temperature distribution of the object surface, high temperature resolution, multi-display method, data storage and process, etc. Infrared thermal imager has also been widely applied in medical, public security, fire fighting, archaeology, transportation, agriculture, geology, etc.

However, most of the thermal imagers available in the market have the disadvantages of large size, heavy weight and not easy to carry with or operate.

### Summary of the Invention

The object of the present invention is to overcome the above mentioned disadvantages in the prior art and provide a novelly designed thermal imager in shape of mobile phone.

Thus, the present invention provides a mobile phone like thermal imager, wherein the housing is in shape of a mobile phone with function keys and display screen on it; the lens is on the top of the housing, and the detector is located at the upper side of the interior of the housing.

The thermal imager according to the present invention has the following advantages:
1. Novel conceive, credible performance and easy to promote
2. Compact design, reasonable layout, light weight, cost effective and easy to carry with and operate
3. Elegant appearance: the shape is similar to a mobile phone.
4. Universal: could replace all the existing thermal imagers

### Brief Description of the Drawings

Figure 1 is a structural schematic view of the thermal imager according to the present invention;
Figure 2 is a left side structural schematic view of the thermal imager according to the present invention;
Figure 3 is a top plan schematic view of the thermal imager according to the present invention;
Figure 4 is a left side schematic view of the thermal imager according to the present invention, shown with the lid (3) in an open position;
Figure 5 is a structural schematic view of another embodiment of the thermal imager according to the present invention; and
Figure 6 is a back schematic view of the thermal imager according to the present invention.

### Detailed Description of the Preferred Embodiments

The thermal imager according to the present invention is further described in the following description, taken in conjunction with the examples and accompanying drawings.

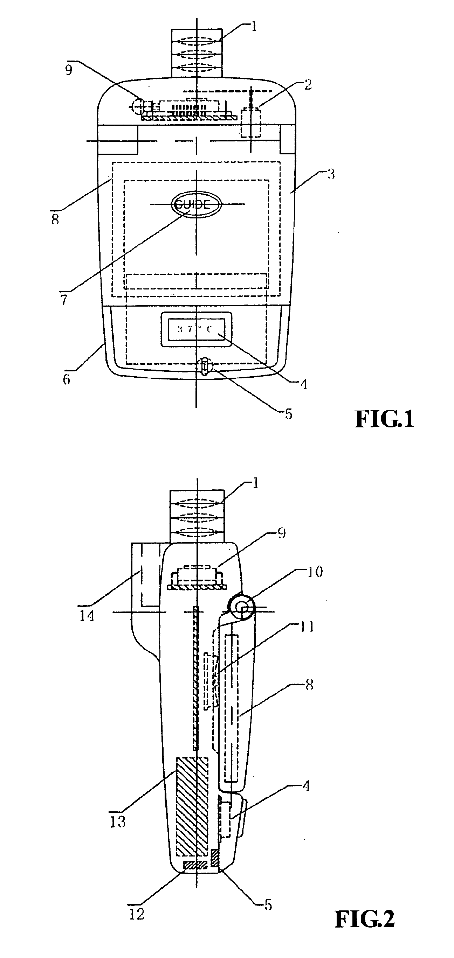

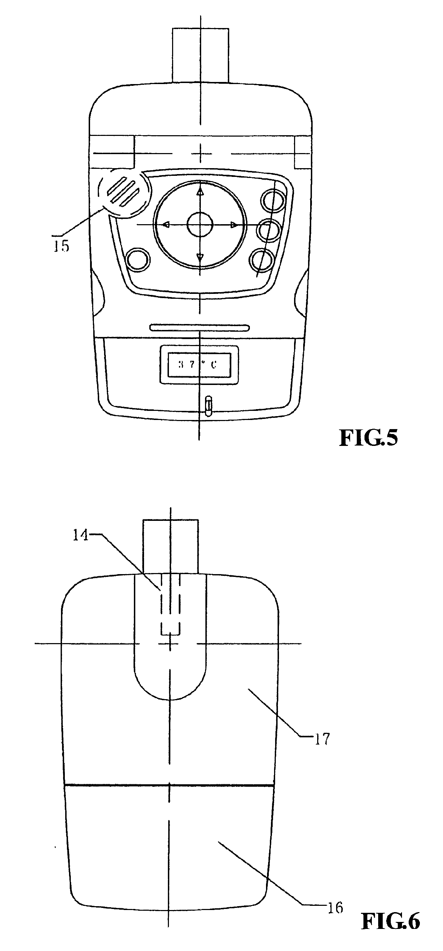

The present invention provides a mobile thermal imager with structure, for example, as shown in Figures 1 and 5, wherein the housing is just like a mobile phone with function keys (11) and display screen on it; the lens (1) is on the top of the housing and the detector (9) is positioned at the upper side of the interior of the housing.

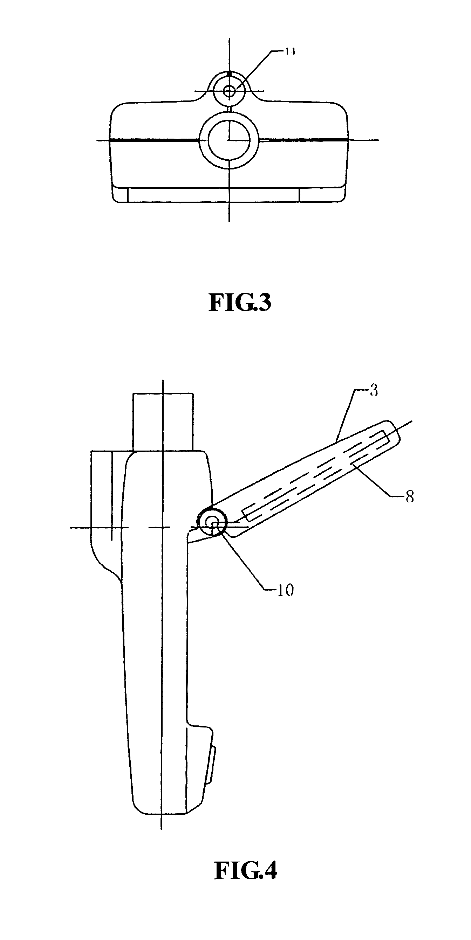

For example, the thermal imager of the present invention may take two kinds of design in shape. One kind is just like a folding mobile phone (refer to Figure 1, Figure 2, Figure 3 and Figure 4), wherein the housing is equipped with lid (3) which is connected with front surface (6) of the housing by rotator (10); and big display screen (8) and function keys (11) are positioned on lid (3). Optionally, small display screen (4) may be equipped on front surface (6) of the housing. Another kind is like plate-style mobile phone (refer to Figure 5). Big display screen (8) (not shown) and function keys (11) are positioned on front surface (6) of the housing. Small display screen (4) may optionally be equipped on front surface (6). Small display screen (4) is used to display time, temperature, battery capacity, etc.

If necessary, many modules can be fixed inside the housing, such as shutter (2), microphone (5), speaker (15), laser locator (14), voice recording device, etc. USB interface (12) may optionally be designed on the lateral of the housing. Shutter (2) and laser locator (14) are at the upper side of the interior of the housing. On back surface (17) of the housing is the battery cabin cover (16). Numerals (7) and (13) in the Figures represent brand and battery, respectively.

The working principle of the thermal imager according to the present invention is conventional and is the same as the prior art.

## Claims

1. A mobile phone like thermal imager comprising a housing and infrared imaging system, **characterized in that** the housing is in shape of a mobile phone with function keys (11) and display screen on it, lens (1) is on top of the housing, and detector (9) is positioned at upper side of the interior of the housing.

2. A mobile phone like thermal imager according to claim 1, **characterized in that** a big display screen (8) and function keys (11) are equipped on front surface (6) of the housing.

3. A mobile phone like thermal imager according to claim 1, **characterized in that** the housing is equipped with lid (3) which is connected with the front surface (6) of the housing, big display screen (8) is positioned on lid (3), and function keys (11) are positioned on front surface (6) of the housing.

4. A mobile phone like thermal imager according to claim 2 or 3, **characterized in that** front surface (6) of the housing is equipped with small display screen (4).

5. A mobile phone like thermal imager according to anyone of claims 1 to 3, **characterized in that** shutter (2) is equipped at upper side of the interior of the housing.

6. A mobile phone like thermal imager according to claim 5, **characterized in that** laser locator (14) is equipped additional at upper side of the interior of the housing.

7. A mobile phone like thermal imager according to claim 5, **characterized in that** speaker (15) and microphone (5) are equipped additionally in the interior of the housing.

8. A mobile phone like thermal imager according to anyone of claims 1 to 3, **characterized in that** USB interface (12) is equipped on the housing.
